# EUROPEAN PATENT SPECIFICATION

(11) **EP 3 142 217 B1**
(45) Date of publication and mention of the grant of the patent: **28.10.2026**
(21) Application number: 15893545.2
(22) Date of filing: 01.06.2015
(51) Int. Cl.: H02J 7/00, H02J 7/60, H02M 3/337, H02M 3/335

(54) **MOBILE TERMINAL COMPRISING A CHARGING CIRCUIT**
MOBILES ENDGERÄT MIT LADEKREIS
TERMINAL MOBILE AVEC CIRCUIT DE CHARGE

(43) Date of publication of application: 15.03.2017
(73) Proprietor: GUANGDONG OPPO MOBILE TELECOMMUNICATIONS CORP., LTD., Dongguan, Guangdong 523860 (CN)
(72) Inventor: ZHANG, Jialiang, Guangdong 523860 (CN)
(74) Representative: Mewburn Ellis LLP
(86) International application number: PCT/CN2015/080490
(87) International publication number: WO 2016/192007

(56) References cited:
- EP-A1- 2 800 235
- WO-A1-2014/103105
- CN-A- 103 872 728
- CN-A- 104 600 796
- CN-U- 201 869 097
- CN-U- 202 231 473
- JP-A- 2013 253 809
- US-A1- 2004 218 406
- US-A1- 2007 210 748
- US-A1- 2013 301 308
- US-A1- 2015 333 634
- US-A1- 2016 359 340

## Description

### TECHNICAL FIELD

The present disclosure relates to mobile terminals, and particularly to a charging circuit, and a mobile terminal.

### BACKGROUND

With the growing popularity of mobile terminal use, terminal charging has become a focused issue of mobile terminal providers.

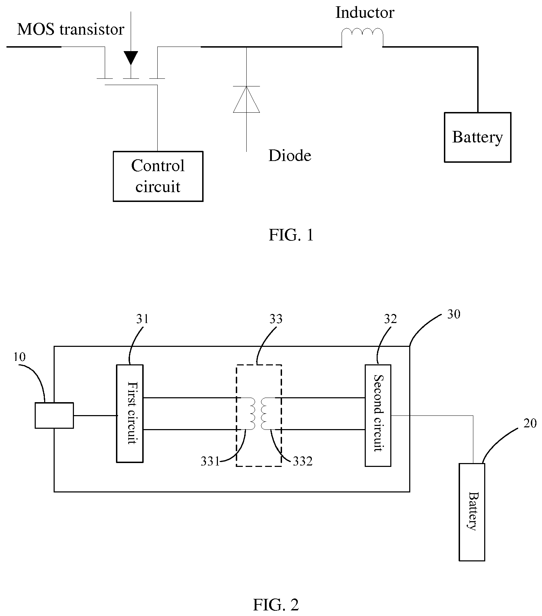

FIG. 1 is a circuit diagram illustrating a charging circuit used in a mobile terminal in the related art. This charging circuit is known as BUCK circuit, which includes a MOS transistor, a control circuit, a diode, an inductor, and a battery. Upon charging, the control circuit controls the MOS transistor to turn-on/turn-off to generate a changing square wave current. The square wave current flows to the inductor from the MOS transistor, and then flows to the battery after voltage stabilization conducted by the inductor.

The above mentioned charging process has a risk of MOS transistor breakdown. Upon MOS transistor breakdown, the current will flow through the inductor, a current/voltage detecting circuit, and the battery directly; this will cause the battery to exceed a limit voltage and may even lead to more serious consequences.

The cause of the damage to the MOS transistor can be as follows.

The MOS transistor is mis-energized; the voltage at both ends of the MOS transistor exceeds a maximum voltage that can be withstood; electrostatic breakdown or surge.

The MOS transistor is of poor quality; or, there is an integrated manufacture technology issue.

There can be other defects.

In order to avoid the above problems and improve the reliability of the MOS transistor, the value of on-resistance (RDSON) of the MOS transistor has been increased so as to improve the voltage resistance of the MOS transistor. On the other hand, high resistance, in turn, would cause the charging circuit to be easy to heat, low energy transmission efficiency and so on.

US 2004/0218406 A1 discloses a contactless electrical energy transmission system includes a transformer having a primary winding that is coupled to a power source through a primary resonant circuit and a secondary winding that is coupled to a load through a secondary resonant circuit. The primary and secondary resonant circuits are inductively coupled to each other.

CN 104600796 A discloses a quickly charging system that includes a charger 410, a mobile terminal 420, therein the charger 410 includes an interface module 411, a AC/DC conversion module 412, a voltage processing module 413 connected in series successively, the interface module 411 is further connected to the voltage processing module 413.

WO 2014/103105 A discloses a DC-to-DC converter that includes first and second switching elements connected in series at a first connection point between a first I/O terminal and a first ground terminal, third and fourth switching elements connected in series at a second connection point between the first I/O terminal and the first ground terminal, a resonance capacitor and resonance inductor connected in series between the first and second connection points, fifth and sixth switching elements connected in series at a third connection point between a second I/O terminal and a second ground terminal, seventh and eighth switching elements connected in series at a fourth connection point between the second I/O terminal and the second ground terminal, a transformer, and a control circuit. The control circuit serves to regulate the switching pulse waveforms of the fifth, sixth, seventh, and eighth switching elements when reducing the voltage of the second I/O terminal and outputting same to the first I/O terminal.

US2013/0301308A1 discloses that in a switching power supply device with reduced size and increased power conversion efficiency, a first resonant circuit including a series resonant inductor and a series resonant capacitor, and a second resonant circuit including a series resonant inductor and a series resonant capacitor, are caused to resonate with each other to cause sympathetic vibration of each resonant circuit, such that transmission is performed by utilizing both magnetic field coupling and electric field coupling between a primary winding and a secondary winding. Operation at a switching frequency higher than a specific resonant frequency of an overall multi-resonant circuit allows a ZVS operation to be performed, enabling a significant reduction in switching loss and high-efficiency operation.

US2007210748A1 discloses that in accordance with an example embodiment, a portable electronic device includes an integrated battery charger adapted to convert a source of alternating current (AC) power to a direct current (DC) power. The integrated battery charger further includes an acoustic isolation transformer.

EP2800235A1 discloses A mobile terminal, and a device and method for charging the same are provided. A power input of a Voltage Bus (VBUS) of a Universal Serial Bus (USB) interface in the mobile terminal is connected to a switch capable of switching off and switching on the power input of the VBUS. During charging, the mobile terminal controls the switch to control an input current to generate a specific current waveform; and a charging device is internally provided with a circuit for detecting the specific current waveform. If the circuit detects the specific current waveform generated by the mobile terminal, an output voltage of the charging device is increased to charge the mobile terminal. The charging device increases the charging power of the USB interface.

### SUMMARY

The present disclosure is set out in the appended claims..

In the technical schemes described above, a DC path of the charging circuit is separated by the magnetic coupling element. That is to say, there is no DC path in the charging circuit. DC current from the charging interface would not be output directly to the second circuit and the battery upon failure of the first circuit, whereby reliability of the charging circuit is improved.

### BRIEF DESCRIPTION OF THE DRAWINGS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.
FIG. 1 is a circuit diagram illustrating a charging circuit in the related art.
FIG. 2 is a block schematic diagram illustrating a charging circuit according to an embodiment of the present disclosure.
FIG. 3 is a circuit diagram illustrating a charging circuit according to an embodiment of the present disclosure.
FIG. 4 is a circuit diagram illustrating a charging circuit according to an embodiment of the present disclosure.
FIG. 5 is a block schematic diagram illustrating a mobile terminal according to an embodiment of the present disclosure.

### DETAILED DESCRIPTION OF ILLUSTRATED EMBODIMENTS

Technical solutions of the embodiments of the present disclosure will be described clearly and completely taken in conjunction with the accompanying drawings; it will be apparent to one of ordinary skill in the art that, the embodiments described below are merely a part of the disclosure and other embodiments obtained out of them without creative work will fall into the protection range of the present disclosure either.

FIG. 2 is block schematic diagram illustrating a charging circuit according to an embodiment of the present disclosure. As shown in FIG.2, a charging circuit 30 is arranged between a charging interface 10 and a battery 20 of a terminal. The charging interface 30 includes a first circuit 31, a magnetic coupling element 33, and a second circuit 32 connected in series successively between the charging interface 10 and the battery 20.

The first circuit 31 is configured to receive a first current from the charging interface 10 and convert the first current to a second current with changed magnitude and/or direction.

The magnetic coupling element 33 includes a first coil 331 and a second coil 332. The first coil 331connects with (in other words, coupled to) the first circuit 31, and the second coil 332 connects with the second circuit 32, the first coil 331 and the second coil 332 separated apart from each other so as to disconnect a direct-current (DC) path of the charging circuit 30. The magnetic coupling element 33 is configured to transfer energy from the first coil 331 to the second coil 332 in an electromagnetic induction manner by utilizing the second current with changed magnitude and/or direction, so as to generate a third current (in other words, the third current is generated at the second coil 332 and is output to the second circuit 32).

The second circuit 32 is configured to adjust alternating current (AC), which is coupled to the second circuit 32 by the first circuit 31 through the magnetic coupling element 33, to DC which is suitable for battery charging.

In this technical scheme, a DC path of the charging circuit is separated by the magnetic coupling element. That is to say, there is no DC path in the charging circuit. DC current from the charging interface would not be output directly to the second circuit and the battery upon failure of the first circuit, whereby reliability of the charging circuit is improved.

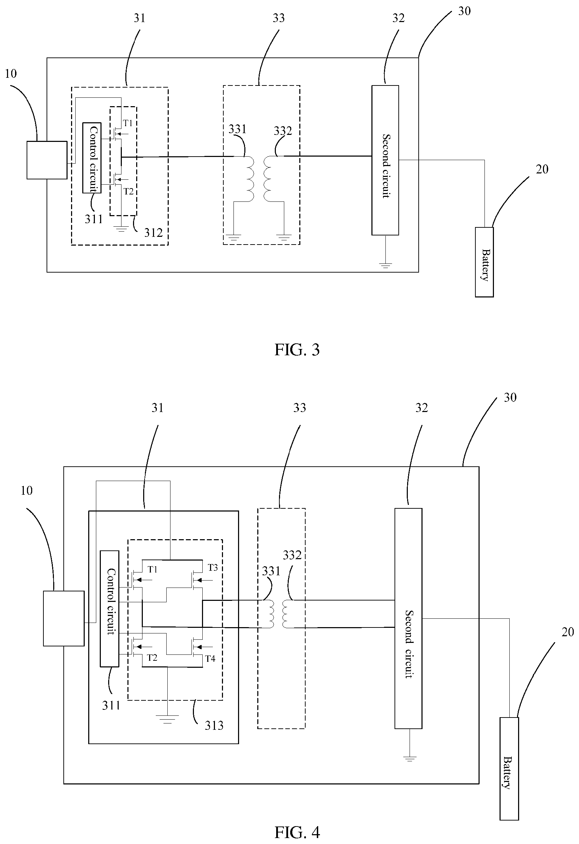

As an embodiment, as shown in FIG.3, the first circuit 31 includes a half-bridge circuit 312 and a control circuit 311 controlling the half-bridge circuit. The half-bridge circuit 312 includes a first switch transistor T1 and a second switch transistor T2. A first end of the first switch transistor T1 connects with the charging interface 10, a second end of the first switch transistor T1 connects with a first end of the first coil 331, and a control end of the first switch transistor T1 connects with the control circuit 311. A first end of the second switch transistor T2 connects with the second end of the first switch transistor T1, a second end of the second switch transistor T2 connects to ground, and a control end of the second switch transistor T2 connects to the control circuit 311. A second end of the first coil 331 connects to ground. Furthermore, two ends of the second coil 332 can connect with the second circuit 32 and ground respectively. Besides, the second circuit 32 can be grounded.

In the embodiment of the present disclosure, a switch transistor (such as a MOS transistor), which is easy breakdown, is arranged within the first circuit. When breakdown of the switch transistor occurs, the first circuit could not convert DC to AC via the switch transistor; this cause DC input at the charging interface being applied to a subsequent component of the charging interface or a battery directly. However, with the aid of the magnetic coupling element arranged between the first circuit and the second circuit, a DC path of the charging circuit can be disconnected. That is to say, DC input at the charging interface cannot flow to the second circuit or the battery even if the switch transistor in the first circuit is broke down or failure, whereby the reliability of the charging circuit of the mobile terminal can be improved.

In addition, the magnetic coupling element has good isolation performance. Thus, instead of increasing the on-resistance so as to increase the voltage resistance of the MOS transistor and then improve the reliability of the circuit like in the prior art, in embodiments of the present disclosure, a lower on-resistance of the switch transistor in the first circuit is allowed, and this will improve the energy transfer efficiency of the whole charging circuit while reducing heating and loss.

As an embodiment, the first circuit includes a full-bridge circuit 313 and a control circuit 311 controlling the full-bridge circuit. The full-bridge circuit 313 includes a first switch transistor T1, a second switch transistor T2, a third switch transistor T3, and a fourth switch transistor T4. A first end of the first switch transistor T1 connects with the charging interface 10, a second end of the first switch transistor T1 connects with a second end of the first coil 331, and a control end of the first switch transistor T1 connects with the control circuit 311. A first end of the second switch transistor T2 connects with the second end of the first switch transistor T1, a second end of the second switch transistor T2 connects to ground, and a control end of the second switch transistor T2 connects with the control circuit 311. A first end of the third switch transistor T3 connects with the charging interface 10, a second end of the third switch transistor T3 connects with the first end of the first coil 331, and a control end of the third switch transistor T3 connects with the control circuit 311. A first end of the fourth switch transistor T4 connects with the second end of the third switch transistor T3, a second end of the fourth switch transistor T4 connects to ground, and a control end of the fourth switch transistor T4 connects with the control circuit 311. In addition, two ends of the second coil 332 can connect with the second circuit 32, and the second circuit can be grounded.

In the embodiment of the present disclosure, a switch transistor (such as a MOS transistor), which is easy breakdown, is arranged within the first circuit. When breakdown of the switch transistor occurs, the first circuit could not convert DC to AC via the switch transistor; this cause DC input at the charging interface being applied to a subsequent component of the charging interface or a battery directly. However, with the aid of the magnetic coupling element arranged between the first circuit and the second circuit, a DC path of the charging circuit can be disconnected. That is to say, DC input at the charging interface cannot flow to the second circuit or the battery even if the switch transistor in the first circuit is broke down or failure, whereby the reliability of the charging circuit of the mobile terminal can be improved.

In addition, the magnetic coupling element has good isolation performance. Thus, instead of increasing the on-resistance so as to increase the voltage resistance of the MOS transistor and then improve the reliability of the circuit like in the prior art, in embodiments of the present disclosure, a lower on-resistance of the switch transistor in the first circuit is allowed, and this will improve the energy transfer efficiency of the whole charging circuit while reducing heating and loss.

As an embodiment, the first circuit 31 includes a switch transistor and a control circuit controlling the switch transistor. A first end of the switch transistor connects with the charging interface 10, a second end of the switch transistor connects with a first end of the first coil 311, and a control end of the switch transistor connects with the control circuit. A second end of the first coil connects to ground.

Technical schemes of the embodiments of the present disclosure can improve the reliability of the charging circuit through a minor modification to the related art.

As an embodiment, the switch transistor in the first circuit includes multiple metal oxide semiconductor field effect transistors (MOSFET).

As an embodiment, the second circuit includes a rectifier circuit and a filter circuit.

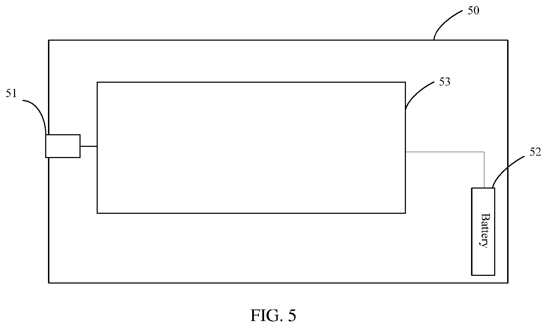

FIG. 5 is a block schematic diagram illustrating a mobile terminal according to an embodiment of the present disclosure. As shown in FIG. 5, a mobile terminal 50 includes a charging interface 51, a battery 52, and a charging circuit 53. The charging circuit 53 can adopt any of the implementations of the charging circuit 30 described above.

In the technical scheme described above, a DC path of the charging circuit is separated by the magnetic coupling element. That is to say, there is no DC path in the charging circuit. DC current from the charging interface would not be output directly to the second circuit and the battery upon failure of the first circuit, whereby reliability of the charging circuit is improved.

As an embodiment, the charging interface 51 is a USB interface.

As an embodiment, the battery 20 is lithium battery.

As an embodiment, the mobile terminal 50 supports a normal charging mode and a quick charging mode, wherein charging current is larger in the quick charging mode than in the normal charging mode.

It should be understood that the phenomenon of MOS transistor breakdown is particularly serious in the mobile terminal which supports quick charging. As to the problem of circuit unreliability upon quick charging caused by MOS transistor breakdown, the mobile terminal according to the embodiment of the present disclosure can be a good solution.

A person skilled in the art will understand, exemplary units or algorithm steps described in any of the embodiments can be achieved via electronic hardware or a combination of electronic hardware and computer software. Whether hardware or software should be adopted depends on design constraints and specific applications of the technical schemes. Respective specific application can use different methods or manners to achieve the function described in the embodiments, which will fall into the protection scope of the present disclosure.

Specific operations of the device, system, and the unit or module can refer to corresponding description of the method according to the embodiment, and will not go into much detail here.

In the embodiments of the present disclosure, the device, system, and method described herein can be achieved in other manners. The configuration of the device according to the embodiment described above is only exemplary; the division of units in the device is a kind of division according to logical function, therefore there can be other divisions in practice. For example, multiple units or components can be combined or integrated into another system; or, some features can be ignored while some units need not to be executed. On the other hand, various function units can be integrated into one processing unit; two or more than two units can be integrated into one unit; or, each unit is physically separate.

Furthermore, various function units can be integrated into one processing unit; two or more than two units can be integrated into one unit; or, each unit is physically separate.

Operations or functions of technical schemes according to the embodiments of the present disclosure, when achieved in the form of software functional units and sold or used as an independent product, can be stored in a computer readable storage medium. According to this, all or a part of the technical schemes of the present disclosure can be realized in the form of software products which can be stored in a storage medium. The storage medium includes USB disk, Read Only Memory (ROM), Random Access Memory (RAM), magnetic disk, CD, and any other medium that can be configured to store computer-readable program code or instructions. The computer-readable program code, when executed on a data-processing apparatus (can be personal computer, server, or network equipment), adapted to perform all or a part of the methods described in the above-mentioned embodiments.

The foregoing descriptions are merely preferred embodiments of the present disclosure, rather than limiting the present disclosure. Various modifications and alterations may be made to the present disclosure for those skilled in the art.

## Claims

1. A mobile terminal (50), comprising:
a charging interface (10);
a battery (20); and
a charging circuit (30), arranged between the charging interface (10) and the battery (20),
wherein the charging circuit (30) comprises:
a first circuit (31), a magnetic coupling element (33), and a second circuit (32) connected in series successively between the charging interface (10) and the battery (20), the first circuit (31) being connected to the charging interface (10) and the second circuit (32) being connected to the battery (20), wherein the charging interface (10) is a USB interface; the mobile terminal (50) supports a normal charging mode and a quick charging mode; and a charging current is larger in the quick charging mode than in the normal charging mode; wherein
the first circuit (31) is configured to receive a first current from the charging interface (10) and convert the first current to a second current with changed magnitude and/or direction, wherein the first current is a direct current;
the magnetic coupling element (33) comprises a first coil (331) and a second coil (332); the first coil (331) connects with the first circuit (31), and the second coil (332) connects with the second circuit (32), the first coil (331) and the second coil (332) separated from each other so as to disconnect a direct-current, DC, path of the charging circuit (30); the magnetic coupling element (33) is configured to transfer energy from the first coil (331) to the second coil (332) in an electromagnetic induction manner by utilizing the second current with changed magnitude and/or direction, so as to generate a third current; and
the second circuit (32) is configured to adjust the third current to a fourth current which is suitable for battery charging, so as to charge the battery (20).

2. The mobile terminal (50) of claim 1, wherein the first circuit (31) comprises a half-bridge circuit (312) and a control circuit (311) controlling the half-bridge circuit (312); the half-bridge circuit (312) comprises a first switch transistor (T1) and a second switch transistor (T2); wherein
the first switch transistor (T1) has a first end configured to connect with the charging interface (10), a second end connected with a first end of the first coil (331), and a control end connected with the control circuit (311);
the second switch transistor (T2) has a first end connected with the second end of the first switch transistor (T1), a second end configured to connect to ground, and a control end connected with the control circuit (311); and
the first coil (331) has a second end configured to connect to ground.

3. The mobile terminal (50) of claim 1, wherein the first circuit (31) comprises a full-bridge circuit (313) and a control circuit (311) controlling the full-bridge circuit (313), the full-bridge circuit (313) comprises a first switch transistor (T1), a second switch transistor (T2), a third switch transistor (T3), and a fourth switch transistor (T4); wherein
the first switch transistor (T1) has a first end configured to connect with the charging interface (10), a second end connected with a second end of the first coil (331), and a control end connected with the control circuit (311);
the second switch transistor (T2) has a first end connected with the second end of the first switch transistor (T1), a second end configured to connect to ground, and a control end connected with the control circuit (311);
the third switch transistor (T3) has a first end configured to connect with the charging interface (10), a second end connected with a first end of the first coil (331), and a control end connected with the control circuit (311); and
the fourth switch transistor (T4) has a first end connected with the second end of the third switch transistor (T3), a second end configured to connect to ground, and a control end connected with the control circuit (311).

4. The mobile terminal (50) of any of claims 1-3, wherein the first circuit (31) comprises a switch transistor and a control circuit (311) controlling the switch transistor;
the switch transistor has a first end configured to connect with the charging interface (10), a second end connected with a first end of the first coil (331), and a control end connected with the control circuit (311); and
the first coil (331) has a second end configured to connect to ground.

5. The mobile terminal (50) of any of claims 1-4, wherein the switch transistor in the first circuit (31) is metal oxide semiconductor field effect transistor, MOSFET.

6. The mobile terminal (50) of any of claims 1-5, wherein the second circuit (32) comprises a rectifier circuit and a filter circuit.

7. The mobile terminal (50) of claim 1, wherein the battery (52) is a lithium battery.

## Patentansprüche

1. Mobiles Endgerät (50), das Folgendes umfasst:
eine Ladeschnittstelle (10);
eine Batterie (20); und
eine Ladeschaltung (30), die zwischen der Ladeschnittstelle (10) und der Batterie (20) eingerichtet ist,
wobei die Ladeschaltung (30) Folgendes umfasst:
eine erste Schaltung (31), ein magnetisches Kopplungselement (33) und eine zweite Schaltung (32), die nacheinander in Reihe zwischen der Ladeschnittstelle (10) und der Batterie (20) geschaltet sind, wobei die erste Schaltung (31) mit der Ladeschnittstelle (10) und die zweite Schaltung (32) mit der Batterie (20) verbunden ist, wobei die Ladeschnittstelle (10) eine USB-Schnittstelle ist; das mobile Endgerät (50) einen normalen Lademodus und einen Schnelllademodus unterstützt; und der Ladestrom im Schnelllademodus höher ist als im normalen Lademodus; wobei
die erste Schaltung (31) dazu konfiguriert ist, einen ersten Strom von der Ladeschnittstelle (10) zu empfangen und den ersten Strom in einen zweiten Strom mit geänderter Größe und/oder Richtung umzuwandeln, wobei der erste Strom ein Gleichstrom ist;
das magnetische Kopplungselement (33) eine erste Spule (331) und eine zweite Spule (332) umfasst; die erste Spule (331) mit der ersten Schaltung (31) verbunden ist, und die zweite Spule (332) mit der zweiten Schaltung (32) verbunden ist, die erste Spule ( 331) und die zweite Spule (332) voneinander getrennt sind, um einen Gleichstrompfad, DC-Pfad, der Ladeschaltung (30) zu unterbrechen; das magnetische Kopplungselement (33) dazu konfiguriert ist, Energie von der ersten Spule (331) auf die zweite Spule (332) mittels elektromagnetischer Induktion zu transferieren, indem es den zweiten Strom mit veränderter Stärke und/oder Richtung nutzt, um einen dritten Strom zu erzeugen; und
die zweite Schaltung (32) dazu konfiguriert ist, den dritten Strom auf einen vierten Strom einzustellen, der für das Laden der Batterie geeignet ist, um die Batterie (20) zu laden.

2. Mobiles Endgerät (50) nach Anspruch 1, wobei die erste Schaltung (31) eine Halbbrückenschaltung (312) und eine Steuerschaltung (311) zum Steuern der Halbbrückenschaltung (312) umfasst; die Halbbrückenschaltung (312) einen ersten Schalttransistor (T1) und einen zweiten Schalttransistor (T2) umfasst; wobei
der erste Schalttransistor (T1) ein erstes Ende aufweist, das dazu konfiguriert ist, mit der Ladeschnittstelle (10) verbunden zu sein, ein zweites Ende, das mit einem ersten Ende der ersten Spule (331) verbunden ist, und ein Steuerende, das mit der Steuerschaltung (311) verbunden ist;
der zweite Schalttransistor (T2) ein erstes Ende aufweist, das mit dem zweiten Ende des ersten Schalttransistors (T1) verbunden ist, ein zweites Ende, das dazu konfiguriert ist, mit Masse verbunden zu sein, und ein Steuerende, das mit der Steuerschaltung (311) verbunden ist; und
die erste Spule (331) ein zweites Ende aufweist, das zum Verbinden mit Masse konfiguriert ist.

3. Mobiles Endgerät (50) nach Anspruch 1, wobei die erste Schaltung (31) eine Vollbrückenschaltung (313) und eine die Vollbrückenschaltung (313) steuernde Steuerschaltung (311) umfasst, wobei die Vollbrückenschaltung (313) einen ersten Schalttransistor (T1), einen zweiten Schalttransistor (T2), einen dritten Schalttransistor (T3) und einen vierten Schalttransistor (T4) umfasst; wobei
der erste Schalttransistor (T1) ein erstes Ende aufweist, das mit der Ladeschnittstelle (10) verbunden ist, ein zweites Ende, das mit einem zweiten Ende der ersten Spule (331) verbunden ist, und ein Steuerende, das mit der Steuerschaltung (311) verbunden ist;
der zweite Schalttransistor (T2) ein erstes Ende aufweist, das mit dem zweiten Ende des ersten Schalttransistors (T1) verbunden ist, ein zweites Ende, das dazu konfiguriert ist, mit Masse verbunden zu sein, und ein Steuerende, das mit der Steuerschaltung (311) verbunden ist;
der dritte Schalttransistor (T3) ein erstes Ende aufweist, das dazu konfiguriert ist, mit der Ladeschnittstelle (10) verbunden zu sein, ein zweites Ende, das mit einem ersten Ende der ersten Spule (331) verbunden ist, und ein Steuerende, das mit der Steuerschaltung (311) verbunden ist; und
der vierte Schalttransistor (T4) ein erstes Ende aufweist, das mit dem zweiten Ende des dritten Schalttransistors (T3) verbunden ist, ein zweites Ende, das mit Masse verbunden ist, und ein Steuerende, das mit der Steuerschaltung (311) verbunden ist.

4. Mobiles Endgerät (50) nach einem der Ansprüche 1-3, wobei die erste Schaltung (31) einen Schalttransistor und eine Steuerschaltung (311), die den Schalttransistor steuert, umfasst;
der Schalttransistor ein erstes Ende aufweist, das dazu konfiguriert ist, mit der Ladeschnittstelle (10) verbunden zu sein, ein zweites Ende, das mit einem ersten Ende der ersten Spule (331) verbunden ist, und ein Steuerende, das mit der Steuerschaltung (311) verbunden ist; und
die erste Spule (331) ein zweites Ende aufweist, das zum Verbinden mit Masse konfiguriert ist.

5. Mobiles Endgerät (50) nach einem der Ansprüche 1-4, wobei der Schalttransistor in der ersten Schaltung (31) ein Metalloxid-Halbleiter-Feldeffekttransistor, MOSFET, ist.

6. Mobiles Endgerät (50) nach einem der Ansprüche 1-5, wobei die zweite Schaltung (32) eine Gleichrichterschaltung und eine Filterschaltung umfasst.

7. Mobiles Endgerät (50) nach Anspruch 1, wobei es sich bei der Batterie (52) um eine Lithiumbatterie handelt.

## Revendications

1. Terminal mobile (50), comprenant :
une interface de charge (10) ;
une batterie (20) ; et
un circuit de charge (30), agencé entre l'interface de charge (10) et la batterie (20),
dans lequel le circuit de charge (30) comprend :
un premier circuit (31), un élément de couplage magnétique (33) et un second circuit (32) connectés successivement en série entre l'interface de charge (10) et la batterie (20), le premier circuit (31) étant connecté à l'interface de charge (10) et le second circuit (32) étant connecté à la batterie (20), dans lequel l'interface de charge (10) est une interface USB ; le terminal mobile (50) prend en charge un mode de charge normal et un mode de charge rapide ; et un courant de charge est plus élevé en mode de charge rapide qu'en mode de charge normal ; dans lequel
le premier circuit (31) est configuré pour recevoir un premier courant provenant de l'interface de charge (10) et convertir le premier courant en un second courant d'amplitude et/ou de direction modifiées, dans lequel le premier courant est un courant continu ;
l'élément de couplage magnétique (33) comprend une première bobine (331) et une seconde bobine (332) ; la première bobine (331) est connectée au premier circuit (31) et la seconde bobine (332) au second circuit (32), la première bobine (331) et la seconde bobine (332) sont séparées de façon à déconnecter le circuit de courant continu, CC, du circuit de charge (30) ; l'élément de couplage magnétique (33) est configuré pour transférer l'énergie de la première bobine (331) à la seconde bobine (332) par induction électromagnétique en utilisant le second courant d'amplitude et/ou de direction modifiées, de façon à générer un troisième courant ; et
le second circuit (32) est configuré pour ajuster le troisième courant à un quatrième courant qui est adapté à la charge de batterie de façon à charger la batterie (20).

2. Terminal mobile (50) selon la revendication 1, dans lequel le premier circuit (31) comprend un circuit demi-pont (312) et un circuit de commande (311) commandant le circuit en demi-pont (312) ; le circuit en demi-pont (312) comprend un premier transistor de commutation (T1) et un second transistor de commutation (T2) ; dans lequel
le premier transistor de commutation (T1) présente une première extrémité configurée pour se connecter à l'interface de charge (10), une seconde extrémité connectée à une première extrémité de la première bobine (331) et une extrémité de commande connectée au circuit de commande (311) ;
le deuxième transistor de commutation (T2) présente une première extrémité connectée à la deuxième extrémité du premier transistor de commutation (T1), une seconde extrémité configurée pour être connectée à la masse et une extrémité de commande connectée au circuit de commande (311) ; et
la première bobine (331) présente une seconde extrémité configurée pour se connecter à la masse.

3. Terminal mobile (50) selon la revendication 1, dans lequel le premier circuit (31) comprend un circuit en pont complet (313) et un circuit de commande (311) commandant le circuit en pont complet (313), le circuit en pont complet (313) comprend un premier transistor de commutation (T1), un deuxième transistor de commutation (T2), un troisième transistor de commutation (T3) et un quatrième transistor de commutation (T4) ;
le premier transistor de commutation (T1) présente une première extrémité configurée pour se connecter à l'interface de charge (10), une seconde extrémité connectée à une seconde extrémité de la première bobine (331) et une extrémité de commande connectée au circuit de commande (311) ;
le deuxième transistor de commutation( T2) présente une première extrémité connectée à la seconde extrémité du premier transistor de commutation (T1), une seconde extrémité configurée pour se connecter à la masse et une extrémité de commande connectée au circuit de commande (311) ;
le troisième transistor de commutation (T3) présente une première extrémité configurée pour se connecter à l'interface de charge (10), une seconde extrémité connectée à une première extrémité de la première bobine (331) et une extrémité de commande connectée au circuit de commande (311) ; et
le quatrième transistor de commutation( T4) présente une première extrémité connectée à la seconde extrémité du troisième transistor de commutation (T3), une seconde extrémité configurée pour se connecter à la masse et une extrémité de commande connectée au circuit de commande (311).

4. Terminal mobile (50) de l'une quelconque des revendications 1 à 3, dans lequel le premier circuit (31) comprend un transistor de commutation et un circuit de commande (311) commandant le transistor de commutation ;
le transistor de commutation présente une première extrémité configurée pour se connecter à l'interface de charge (10), une seconde extrémité connectée à une première extrémité de la première bobine (331) et une extrémité de commande connectée au circuit de commande (311) ; et
la première bobine (331) présente une seconde extrémité configurée pour se connecter à la masse.

5. Terminal mobile (50) de l'une quelconque des revendications 1 à 4, dans lequel le transistor de commutation dans le premier circuit (31) est un transistor à effet de champ à semi-conducteur à oxyde métallique, MOSFET.

6. Terminal mobile (50) de l'une quelconque des revendications 1 à 5, dans lequel le second circuit (32) comprend un circuit redresseur et un circuit de filtrage.

7. Terminal mobile (50) selon la revendication 1, dans lequel la batterie (52) est une batterie au lithium.
